# EUROPÄISCHE PATENTANMELDUNG

(11) **EP 4 360 785 A1**
(43) Veröffentlichungstag der Anmeldung: **01.05.2024**
(21) Anmeldenummer: 23206292.7
(22) Anmeldetag: 27.10.2023
(51) Int. Cl.: B23B 51/04, B28D 1/04, C23C 24/10, B22F 1/17

(54) **KERNBOHRAUFSATZ**

(30) Priorität: 28.10.2022 DE 102022212875
(71) Anmelder: Kaiser GmbH & Co. KG, 58579 Schalksmühle (DE)
(72) Erfinder: Bocks, Arne, 42477 Radevormwald (DE); Marowsky, Michel, 58509 Lüdenscheid (DE)
(74) Vertreter: Rentsch Partner AG

(57) **Zusammenfassung**

Die Erfindung betrifft einen Kernbohraufsatz (1) zur Herstellung von Ausnehmungen in einer Wandung für die Installation von Hohlwanddosen und ein Verfahren zur Herstellung eines Kernbohraufsatzes (1). Der Kernbohraufsatz (1) umfasst eine Bohrkrone (2) mit einer röhrenförmigen Seitenwand (3), welche sich in eine axiale Richtung entlang einer Rotationsachse (RA) der Bohrkrone (2) von einem proximalen Ende (4) zu einem distalen Ende (5) der röhrenförmigen Seitenwand (3) erstreckt und mindestens ein im Bereich des proximalen Endes (4) der röhrenförmigen Seitenwand (3) angeordnetes Randsenkelement (7). Das mindestens eine Randsenkelement (7) umfasst ein Basiselement und mindestens einen auf dem Basiselement angeordneten Senkkörper (10), wobei der mindestens eine Senkkörper (9) zumindest bereichsweise in eine radiale Richtung ausserhalb einer Kontur der röhrenförmigen Seitenwand (3) angeordnet ist und zum Abtragen einer obersten Schicht der Wandung um die Ausnehmung der Wandung dient. Der mindestens eine Senkkörper (10) wird je von mehreren Senkpartikel (9) ausgebildet.

## Beschreibung

Die Erfindung betrifft einen Kernbohraufsatz zur Herstellung von Ausnehmungen in einer Wandung für die Installation von Hohlwanddosen.

### HINTERGRUND DER ERFINDUNG

Aus dem Stand der Technik sind Kernbohraufsätze zur Herstellung von Ausnehmungen in einer Wandung für die Installation von Hohlwanddosen bekannt. In der Regel enthalten diese Kernbohraufsätze, nebst weiteren Elementen, ein tellerförmiges Randsenkelement zum Abtragen einer obersten Schicht der Wandung um die Ausnehmung der Wandung herum. Hierfür sind typischerweise auf dem tellerförmigen Randsenkelement (integrale) Rändelungen oder geschliffene Hartmetallkugeln angebracht. Die Rändelung ist dabei in der Regel umlaufend auf dem tellerförmigen Randsenkelement angebracht, wobei die Anordnung der Rändelung einer Spiralverzahnung oder einer Palloid Verzahnung entspricht. Die aus dem Stand der Technik bekannten Randsenkelemente mit Hartmetallkugeln enthalten typischerweise einzelne um den Umfang voneinander beabstandet aufgeschweisste und geschliffene Hartmetallkugeln. Derartige Hartmetallkugeln haben hierbei in der Regel einen Durchmesser von ca. 2 - 4 mm.

Die aus dem Stand der Technik bekannte Randsenkelemente haben jedoch den Nachteil, dass je nach Beschaffenheit der Wandung, wie beispielsweise einer Gipskartonplatte, einer Gipsfaserplatte, einer Spanplatte oder einer Holzwandung, entweder ein Randsenkelement mit einer Rändelung oder ein Randsenkelement mit geschliffenen Hartmetallkugeln verwendet werden muss. Bei einer Verwendung eines unpassenden Randsenkelements kann die umliegende Oberfläche der Wandung z.B. unterschiedlich stark abgetragen werden, Verbrennungen aufweisen, ausbrechen oder ausreissen. Ein weiterer Nachteil der aus dem Stand der Technik bekannten Randsenkelemente ist, dass einerseits durch die Materialabtragung an den Rändelungen oder an den Hartmetallkugeln während dem Bohr- respektive Fräsprozess und andererseits durch die thermische Belastung das Randsenkelement respektive der gesamte Bohraufsatz regelmässig ausgewechselt werden muss.

Die Aufgabe der Erfindung ist es daher einen Kernbohraufsatz mit einem Randsenkelement bereitzustellen, welcher für eine Vielzahl unterschiedlicher Wandungen geeignet ist und eine verbesserte Haltbarkeit aufweist.

### ZUSAMMENFASSUNG DER OFFENLEGUNG

Die vorliegende Erfindung bezieht sich auf einen Kernbohraufsatz zur Herstellung von Ausnehmungen in einer Wandung für die Installation von Hohlwanddosen in den Ausnehmungen.

Hierzu umfasst der Kernbohraufsatz eine Bohrkrone und mindestens ein Randsenkelement. Die Bohrkrone umfasst eine röhrenförmige Seitenwand, welche sich von einem proximalen Ende zu einem distalen Ende entlang einer Rotationsache der Bohrkrone erstreckt. Mit Vorteil ist die röhrenförmigen Seitenwand dünnwandig. Beispielsweise kann die Seitenwand aus einem Blech geformt sein. An dem distalen Ende der röhrenförmigen Seitenwand ist eine Schneidkante angeordnet. Die Schneidkante weist vorzugsweise eine Vielzahl umlaufend angeordneter Schneidzähne auf.

Im Bereich des proximalen Endes der röhrenförmigen Seitenwand kann das mindestens eine Randsenkelement angeordnet sein. Jedoch ist auch eine Anordnung zwischen dem proximalen und distalen Ende denkbar. Je nach Ausführungsform kann das mindestens eine Randsenkelement mit der Bohrkrone formschlüssig und/oder kraftschlüssig und/oder stoffschlüssig wirkverbunden sein. Gemäss der Erfindung weist das mindestens eine Randsenkelement (jeweils) ein Basiselement und mindestens einen auf dem Basiselement angeordneten Senckörper auf. Der mindestens eine Senkkörper ist hierbei zumindest bereichsweise (in eine radiale Richtung, respektive aus der axialen Richtung betrachtet) ausserhalb einer Kontur der röhrenförmigen Seitenwand angeordnet und dient zum Abtragen einer obersten Schicht der Wandung um die Ausnehmung der Wandung herum. Mit Vorteil schliesst mindestens ein Senkkörper oder sämtliche Senkkörper aus der axialen Richtung betrachtet an die Kontur der Seitenwand an, respektive mindestens ein Senkkörper oder sämtliche Senkkörper sind (im montierten Zustand) direkt neben der Seitenwand positioniert. Insbesondere dient der mindestens eine Senkkörper, respektive das mindestens eine Randsenkelement dazu, einen umlaufender Absatz an der durch die Bohrkrone geschaffene Ausnehmung der Wandung zu schaffen. Der umlaufende Absatz kann zur Aufnahme eines Randes einer in die Ausnehmung der Wandung eingesetzten Hohlwanddose dienen, sodass die Hohlwanddose bündig mit der Wandung abschliesst. Der Absatz kann ebenfalls eine Fase umfassen oder als Fase ausgestaltet sein.

Erfindungsgemäss wird der mindestens eine Senkkörper je von mehreren Senkpartikeln ausgebildet. Vorzugsweise sind die mehreren Senkpartikel hierbei untereinander zumindest bereichsweise miteinander stoffschlüssig verbunden und/oder das Basiselement und der Senkkörper sind stoffschlüssig miteinander verbunden. Mit Vorteil ist ein jeweiliger Senkpartikel hierbei mit über 50%, insbesondere mit über 75% der zu diesem Senkpartikel benachbarten Senkpartikeln stoffschlüssig verbunden. Unter der stoffschlüssigen Verbindung zwischen dem Basiselement und dem Senkkörper wird verstanden, dass zumindest eine Schicht von Senkpartikeln, welche an dem Basiselement anliegt, mit diesem stoffschlüssig verbunden sind. Ein Beispiel für stoffschlüssiges Verbinden ist das Verlöten und/oder Verschweissen und/oder Verkleben.

Der eine oder die mehreren Senkkörper umfassen mit Vorteil (je) eine oder mehrere Schichten von Senkpartikeln. Die Schichten können sich hierbei senkrecht zur axialen Richtung und/oder parallel zu einer Frontseite des Basiselements erstrecken. Die Frontseite des Basiselementes ist hierbei zum distalen Ende der Seitenwand hingewandt. In einer Schicht von Senkpartikeln kann jeder Senkpartikel mit mindestens einen weiteren benachbarten Senkpartikel dieser Schicht (vorteilhafterweise jedoch mit mehreren benachbarten Senkpartikeln) in Berührung und/oder stoffschlüssig verbunden sein. Zwischenräume zwischen den jeweiligen Senkpartikeln können bereichsweise oder gänzlich z.B. mit Lot und/oder mit Füllmaterial ausgefüllt sein. Auch das Auffüllen der Zwischenräume mit kleineren Füllpartikeln ist denkbar. Die Füllpartikel können abgesehen von der Grösse gleich ausgestaltet sein wie die Senkpartikel. Je nach Ausgestaltung können auch mehrere Schichten von Senkpartikeln übereinander angeordnet sein. Beispielsweise können zwischen 1 bis 5 Schichten von Senkpartikeln vorhanden sei. Die Senkpartikel einer Schicht können geordnet oder ungeordnet angeordnet sein. Die jeweiligen Schichten von Senkpartikel können in axialer Richtung ebenfalls ineinandergreifen. Die Anzahl der aufgetragenen Schichten von mehreren Senkpartikeln ist dabei von der Partikelgrösse und/oder von einer gewünschten Senktiefe abhängig. Der schichtartige Aufbau des Senkkörpers hat den Vorteil, dass das Randsenkelement bei Abnutzung dennoch nicht an Effektivität verliert, solange noch restliche Schichten an Senkpartikel vorhanden sind. Somit wird eine erhöhte Haltbarkeit erzeugt. Ebenfalls hat sich gezeigt, dass die Senkpartikel für eine Vielzahl von unterschiedlichen Arten von Wandungen verwendet werden können.

Je nach Ausführungsform können die mehreren Senkpartikel jeweils eine durchschnittliche Partikelgrösse zwischen 0.5 mm bis 1.2 mm aufweisen. Die Senkpartikel sind hierbei mit Vorteil sphärisch ausgestaltet, jedoch sind auch Abweichung von dieser Form denkbar. Je nach Anwendung können die mehreren Senkpartikel je einen Kern und eine den Kern umgebende Ummantelung aufweisen. Die Ummantelung kann aus einem Material mit einer niedrigeren Schmelztemperatur als einer Schmelztemperatur eines Materials des Kerns bestehen. In anderen Worten kann das Material der Ummantelung derart ausgewählt sein, dass dieses bei Erhitzung schmilzt und die jeweiligen Senkpartikel eines Senkkörpers stoffschlüssig miteinander verbindet. Die Ummantelung kann hierzu z.B. aus Lot bestehen. Der Kern umfasst mit Vorteil Metall, insbesondere Hartmetall (wie z.B. Stahl oder Edelstahl). Jedoch ist auch eine Ausgestaltung der Senkpartikel ohne Ummantelung denkbar. In diesem Fall kann der Senkkörper weiterhin Lot oder Kleber oder ähnliches umfassen, welches auf die Senkpartikel gegeben wird, um eine stoffschlüssige Verbindung bereitzustellen. D.h. die Senkpartikel können je zumindest bereichsweise aus Hartmetall bestehen (z.B. wenn ein Kern und eine Ummantelung vorliegt und lediglich der Kern aus Hartmetall besteht) oder gänzlich aus Hartmetall bestehen. Weiterhin kann der mindestens eine Senkkörper galvanisiert sein. Vorteilhafterweise ist jedoch das ganze (mindestens eine) Randsenkelement galvanisiert. Insbesondere bei der Verwendung von Senkpartikeln aus Stahl, ist Galvanisierung vorteilhaft, um die Haltbarkeit des mindestens einen Randsenkelements zu erhöhen.

Je nach Ausführungsform können die Senkpartikel auf dem mindestens einen Senkkörper in axialer Richtung von der Frontseite des Basiselementes 0.8 bis 2 mm vorstehen. Der Überstand des mindestens einen Senkkörpers über die Frontseite entspricht einer maximalen Senktiefe des mindestens einen Randsenkelements. Der mindestens eine Senkkörper kann weiter eine Senkkörperbreite in radialer Richtung von 1 mm bis 3mm aufweisen.

Je nach Ausführungsform kann der mindestens eine Senkkörper bereichsweise um die Rotationsachse umlaufend ausgestaltet sein. Wenn nur ein Senkkörper vorhanden ist, kann dieser z.B. ringförmig sein. Ebenfalls denkbar sind mehrere auf dem Basiselement angeordnete Senkkörper. Die mehreren Senkkörper sind dabei vorteilhalfterweise an derselben radialen Position angeordnet. Des Weiteren weisen die mehreren Senkkörper mit Vorteil dieselbe Senktiefe auf, um ein gleichmässiges Abtragen der obersten Schicht der Wandung zu gewährleisten. Die mehreren Senkkörper können ferner um die Rotationsachse verteilt angeordnet sein. Mit Vorteil sind dabei die mehreren Senkkörper rotationssymmetrisch um die Rotationsachse verteilt angeordnet.

Je nach Ausgestaltung kann das Basiselement mindestens eine Tasche zur bereichsweisen Aufnahme mindestens eines Senkkörpers aufweisen. Eine jeweilige Tasche dient dabei insbesondere zur Aufnahme und Positionierung mehrerer Senkpartikel zur Ausbildung des einen oder der mehreren Senkkörper. Mit Vorteil ist jedoch pro Senkkörper eine Tasche vorhanden. Die mindestens eine Tasche kann dabei (entsprechend der Senkkörper) zumindest bereichsweise um die Rotationsachse auf dem Basiselement umlaufend angeordnet sein. Die mindestens eine Tasche kann sich dabei von einer Frontseite des Basiselements in axialer Richtung in das Basiselement hinein erstrecken. Die mindestens eine Tasche kann z.B. in das Basiselement eingefräst oder eingestanzt sein. Alternativ kann die mindestens eine Tasche durch (je) einen umgeformten Bereich des Basiselementes ausgebildet sein. Die mindestens eine Tasche kann dabei eine Taschentiefe von 0,2 mm bis 1 mm aufweisen.

Je nach Ausgestaltung des Kernbohraufsatzes kann das Basiselement ringförmig oder tellerförmig ausgestaltet sein. Derartige Ausgestaltungen eignen sich insbesondere für den Fall, dass nur ein Randsenkelement vorgesehen ist. Im montierten Zustand der Bohrkrone liegt dann eine Rotationsachse des Basiselements koaxial zur Rotationsachse der Bohrkrone. Weiterhin kann das tellerförmige Basiselement eine mittig angeordnete, sich in axiale Richtung erstreckende Vertiefung zur bereichsweisen Aufnahme der Bohrkrone, insbesondere des proximalen Endes der Bohrkrone, aufweisen. Mit Vorteil ist hierbei der mindestens eine Senkkörper auf dem tellerförmigen Basiselement neben der Vertiefung, insbesondere an die Vertiefung anschliessend, angeordnet. Das tellerförmige Basiselement kann ferner eine zur Rotationsachse koaxial angeordnete Öffnung zur Durchführung eines Einspannschaftes umfassen. In der koaxialen Öffnung können Formelemente angeordnet sein, welche einen Formschluss zu dem durch diese durchführbaren Einspannschaft bereitstellen. Weitere aussermittige Öffnungen in dem tellerförmigen Basiselement sind denkbar (z.B. zur Abführung von Spänen und/oder Wärme).

Je nach Ausgestaltung kann die Bohrkrone topfartig ausgeformt sein und einen Boden umfassen. Der Boden kann mit dem proximalen Ende der röhrenförmigen Seitenwand wirkverbunden sein, insbesondere verschweisst sein. Der Boden sowie die daran anschliessende röhrenförmige Seitenwand umschliessen dabei gemeinsam einen Aufnahmeraum der Bohrkrone. Der Aufnahmeraum dient dazu den aus der Wandung herausgetrennten Wandausschnitt (auch Kern genannt) aufzunehmen. Analog zum tellerförmigen Basiselement kann auch der Boden eine koaxiale Öffnung zur Aufnahme des Einspannschaftes und/oder weitere aussermittig angeordnete Öffnungen aufweisen. Alternativ oder ergänzend kann auch in der Seitenwand mindestens eine Ausnehmung angeordnet sein. Die Ausnehmung kann dazu dienen einen in der Bohrkrone aufgenommenen Wandausschnitt leicht entfernen zu können.

Wie beschrieben, kann der Kernbohraufsatzje nach Ausführung einen Einspannschaft umfassen. Dieser dient dazu den Kernbohraufsatz mit einem Bohrgerät wirkzuverbinden. Der Einspannschaft kann sich durch die koaxiale Öffnung des Bodens und je nach Ausgestaltung auch durch eine koaxiale Öffnung des Basiselementes in den Aufnahmeraum der Bohrkrone erstrecken. An dem Einspannschaft kann ein Zentrierbohrer ausgebildet sein. Alternativ kann der Einspannschaft auch eine Aufnahme für den Zentrierbohrer aufweisen. Die Aufnahme befindet sich im montierten Zustand im Aufnahmeraum der Bohrkrone. In einer bevorzugten Ausführungsform ragt der Zentrierbohrer in axiale Richtung über das distale Ende der röhrenförmigen Seitenwand aus dem Aufnahmeraum hinaus. Ferner kann der Kernbohraufsatz eine Spiralfeder umfassen um das Entfernen des Wandausschnittes aus der Bohrkrone zu erleichtern. Die Spiralfeder ist zumindest bereichsweise in dem Aufnahmeraum angeordnet und kann den Zentrierbohrer umgeben. Die Spiralfeder ist vorzugsweise konisch ausgeführt. Mit Vorteil nimmt hierbei die Kontur der konischen Spiralfeder in axiale Richtung mit zunehmendem Abstand zum proximalen Ende der röhrenförmigen Seitenwand zu.

In einem weiteren Aspekt bezieht sich die vorliegende Erfindung auf ein Verfahren zur Herstellung eines Kernbohraufsatzes, insbesondere eines Kernbohraufsatzes wie zuvor beschrieben. Die zuvor beschriebenen Ausführungsformen des Kernbohraufsatzes können hierbei zur Ausführung des erfindungsgemässen Verfahrens dienen. Die nachstehend beschriebenen Ausführungsformen des Verfahrens offenbaren zugleich entsprechend ausgestaltete Ausführungen des Kernbohraufsatzes.

Das erfindungsgemässe Verfahren umfasst die folgenden Verfahrensschritte: a) Bereitstellens eines Basiselements; b) Bereitstellen mehrere Senkpartikel; c) Auftragen der mehreren Senkpartikel auf dem Basiselement zur Ausbildung mindestens eines Senkkörpers; d) Verbinden, insbesondere stoffschlüssiges Verbinden, der mehreren Senkpartikel mit dem Basiselement zu einem Randsenkelement.

Hierbei kann das Auftragen der mehreren Senkpartikel schichtweise erfolgen. Weiterhin kann das stoffschlüssige Verbinden mittels Verlöten oder Verschweissen umgesetzt werden. In einer möglichen Variante können Senkpartikel bereitgestellt werden, welche je einen Kern und eine Ummantelung umfassen (wie oben beschrieben). Vor dem Verfahrensschritt des stoffschlüssigen Verbindens können die Senkpartikel erhitzt werden, sodass die jeweiligen Ummantelungen schmelzen und eine stoffschlüssige Verbindung der mehreren Senkpartikel mit dem Basiselement und/oder der mehreren Senkpartikel untereinander herstellen. Demnach werden die Senkpartikel (und das Basiselement) auf eine Temperatur erhitzt, welche kleiner ist als die Schmelztemperatur der Kerne und grösser ist als die Schmelztemperatur der Ummantelungen. Das Schmelzen der jeweiligen Ummantelungen kann in einem Durchlaufofen erfolgen, durch welchen das Basiselement mit den darauf aufgetragenen Senkpartikeln durchfährt.

Je nach gewähltem Material(ien) der mehreren Senkpartikel, insbesondere des Kerns, kann das mindestens eine Randsenkelement anschliessend galvanisiert werden.

Optional kann das Verfahren den Verfahrensschritt des Einbringens von mindestens einer Tasche in eine Frontseite des Basiselementes umfassen und das Positionieren von mehreren Senkpartikeln in einer jeweiligen Tasche zur Ausbildung eines jeweiligen oder mehreren Senkkörper umfassen. Das Einbringen der Tasche kann durch Umformen des Basiselementes vorgenommen werden. Des Weiteren kann das Verfahren die Verfahrensschritte des Bereitstellens einer Bohrkrone sowie das Wirkverbinden der Bohrkrone mit dem mindestens einen Randsenkelement als umfassen. Das Randsenkelement kann dabei formschlüssig und/oder kraftschlüssig und/oder stoffschlüssig mit der Bohrkrone wirkverbunden werden.

### KURZBESCHREIBUNG DER FIGUREN

Die hier beschriebene Offenlegung wird aus der nachstehenden detaillierten Beschreibung und den beigefügten Figuren, die nicht als Einschränkung der in den beigefügten Ansprüchen beschriebenen Offenlegung angesehen werden sollten, verstanden werden. Die Figuren zeigen:
- Fig. 1: Eine Ausführungsform eines Kernbohraufsatzes gemäss der Erfindung in einer perspektivischen Ansicht;
- Fig. 2: Explosionsansicht des Kernbohraufsatzes nach Figur 1 in einer perspektivischen Ansicht;
- Fig. 3: Draufsicht auf das tellerförmige Basiselement mit drei Randsenkelementen nach Figur 1;
- Fig. 4: Draufsicht auf einen vergrösserten Ausschnitt eines Randsenkelements aus Figur 3.

### BESCHREIBUNGEN DER AUSFÜHRUNGSFORMEN

Im Folgenden wird im Detail auf bestimmte Ausführungsformen der Erfindung Bezug genommen, von denen Beispiele in den beigefügten Figuren dargestellt sind, in denen einige, aber nicht alle Merkmale gezeigt werden. In der Tat können die hier offengelegten Ausführungsformen in vielen verschiedenen Formen verkörpert werden und sollten nicht so ausgelegt werden, dass sie auf die hier dargelegten Ausführungsformen beschränkt sind; vielmehr werden diese Ausführungsformen bereitgestellt, damit diese Offenlegung den geltenden rechtlichen Anforderungen genügt. Wann immer möglich, werden gleiche Referenznummern verwendet, um auf die gleichen Komponenten oder Teile zu verweisen. Vielmehr sind die in der Beschreibung verwendeten Wörter eher beschreibend als einschränkend, und es versteht sich, dass verschiedenen Änderungen vorgenommen werden können, ohne vom Umfang der Offenlegung abzuweichen.

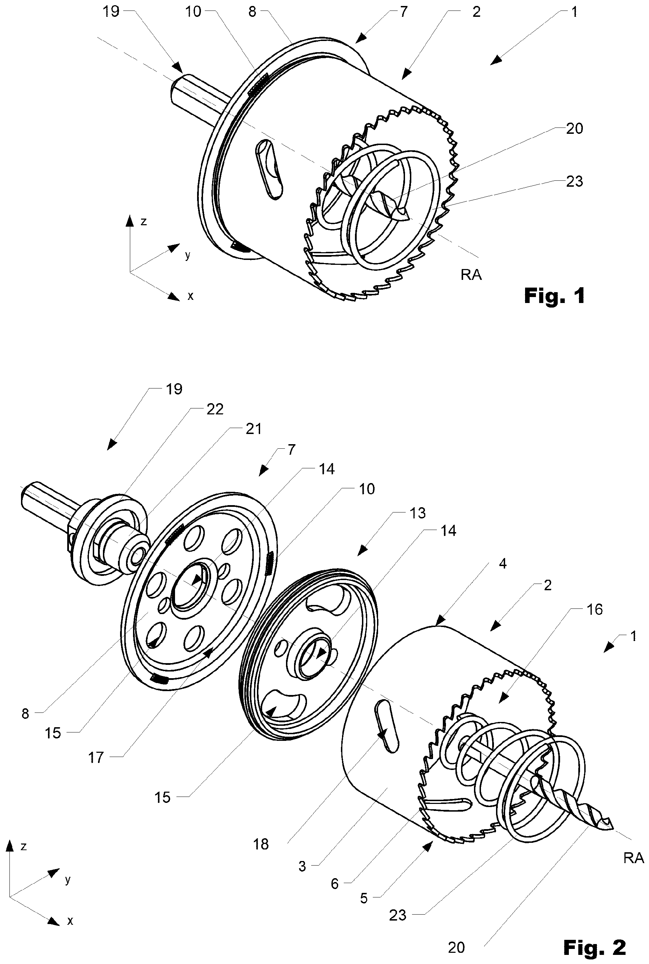

Figur 1 - Figur 4 zeigen eine Ausführungsform eines Kernbohraufsatzes gemäss der Erfindung. **Figur 1** zeigt eine perspektivische Ansicht eines Ausführungsbeispiels eines Kernbohraufsatzes 1 in zusammengesetztem Zustand und **Figur 2** zeigt den in der **Figur 1** gezeigten Kernbohraufsatz 1 in einer Explosionsansicht. Der gezeigte Kernbohraufsatz 1 umfasst eine Bohrkrone 2 sowie ein Randsenkelement 7. Die Bohrkrone 2 umfasst einen Boden 13 und eine röhrenförmige Seitenwand 3, welche sich von einem proximalen Ende 4 zu einem distalen Ende 5 in axialer Richtung entlang einer Rotationsachse RA der Bohrkrone 2 erstreckt. Der Boden 13 ist mit dem proximalen Ende 4 der Seitenwand 3 verschweisst. Der Boden 13 und die Seitenwand 3 umschliessen dabei gemeinsam einen Aufnahmeraum 16 der Bohrkrone 2. Am distalen Ende 5 weist die Seitenwand 3 eine Schneidkante 6 mit umlaufend angeordneten Schneidzähnen auf.

Das Randsenkelement 7 umfasst ein tellerförmiges Basiselement 8 und insgesamt drei auf dem Basiselement 8 angeordneten Senkkörpern 10. Eine andere Anzahl von Senkkörpern 10 ist ebenfalls denkbar. Das Basiselement 8 ist im Bereich des distalen Endes 5 der Seitenwand 3 mit der Bohrkrone 2 wirkverbunden. Die Senkkörper 10 sind in radialer Richtung ausserhalb der röhrenförmigen Seitenwand 3 angeordnet.

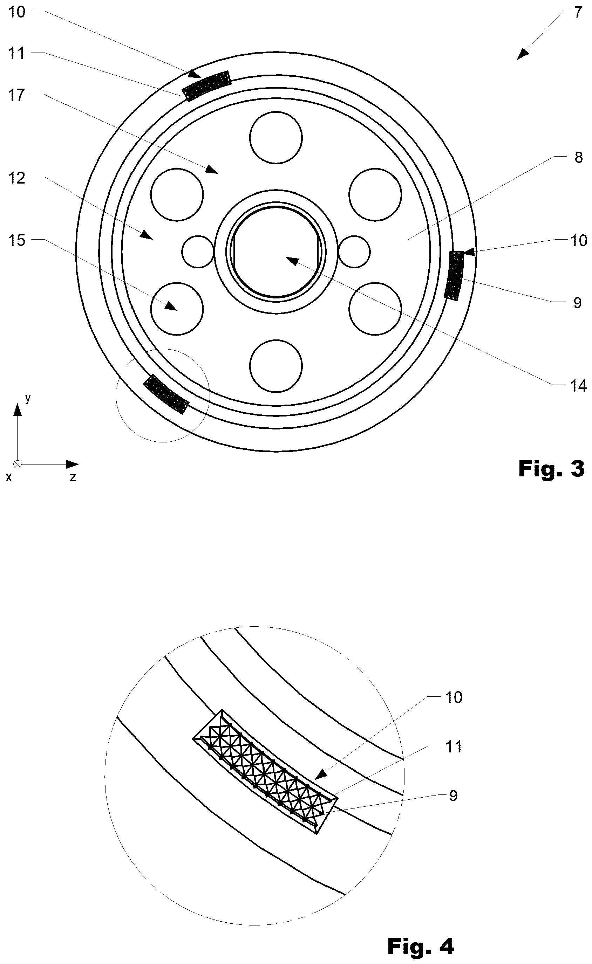

Wie in **Figur 3** erkennbar, weist das Basiselement 8 in axiale Richtung eine mittige Vertiefung 17 auf, welche zur bereichsweisen Aufnahme der Bohrkrone dient. Die Vertiefung 17 erstreckt sich hierzu vom proximalen Ende 4 der röhrenförmigen Seitenwand 3 weg. Die Bohrkrone 2 umfasst weiter eine im Boden 13 koaxiale Öffnung 14 zur Aufnahme eines Einspannschaftes 19 des Kernbohraufsatz 1. Die Bohrkrone 2 weist weiter im Boden 13 aussermittig angeordnete Öffnungen 15 und zwei Ausnehmungen 18 in der Seitenwand 3 auf. Die Ausnehmungen 18 können dazu dienen einen in der Bohrkrone 2 aufgenommenen Wandausschnitt leichter zu entfernen. Die zwei aussermittig angeordneten Öffnungen 15 können zum Abführen von Spänen und /oder Wärme dienen.

Des Weiteren umfasst der in dieser Ausführung gezeigte Kernbohraufsatz 1 eine Spiralfeder 23, welche innerhalb der Bohrkrone 2 angeordnet ist. Die Spiralfeder 23 ist konisch ausgeführt und nimmt in axiale Richtung mit zunehmendem Abstand zum proximalen Ende 4 der röhrenförmigen Seitenwand 3 zu. Der sich in axiale Richtung koaxial zur Bohrkrone 2 erstreckende Einspannschaft 19 weist eine in der Bohrkrone 2 angeordnete Aufnahme für einen Zentrierbohrer 20 auf. Der Zentrierbohrer 20 ragt in axiale Richtung über das distale Ende 5 der röhrenförmigen Seitenwand 3 hinaus. Der Einspannschaft 19 umfasst weiter einen Stutzen 21, an dem die Aufnahme des Zentrierbohrers 20 angeordnet ist. Des Weiteren umfasst der Einspannschaft 19 einen radial umlaufenden Kragen 22. Das Randsenkelement 7, bzw. das tellerförmige Basiselement 8 ist hierbei in axialer Richtung zwischen dem Kragen 22 und der Bohrkrone 2 angeordnet und kraftschlüssig gegen den Boden 13 verspannt.

**Figur 3** zeigt eine Draufsicht auf die Frontseite 12 des Randsenkelements 7 gemäss **Figur 1****.** Die Senkkörper 10 sind ersichtlich rotationssymmetrisch und in radialer Richtung partiell umlaufend auf dem tellerförmigen Basiselement 8 angeordnet. Die Senkkörper 10 sind im vorliegenden Fall stoffschlüssig mit dem Basiselement 8 verbunden. Zur vereinfachten Aufnahme sind auf dem tellerförmigen Basiselement 8 pro Senkkörper 10 eine Tasche 11 angeordnet. **Figur 4** zeigt einen vergrösserten Ausschnitt aus **Figur 3****.** Schematisch dargestellt ist erkennbar, wie der Senkkörper 10 durch mehrere miteinander teilweise stoffschlüssig verbundene Senkpartikel 9 gebildet wird. Diese können in axiale Richtung geschichtet sein, respektive der Senkkörper 10 kann mehrere Schichten von Senkpartikeln 9 in axialer Richtung aufweisen. Die Senkpartikel 9 bestehen mit Vorteil aus Hartmetall, wie z.B. Edelstahl.

### LISTE DER BEZUGSZEICHEN

| | | | |
|---|---|---|---|
| 1 | Kernbohraufsatz | 14 | Koaxiale Öffnung |
| 2 | Bohrkrone | 15 | Aussermittige Öffnung |
| 3 | Röhrenförmige Seitenwand | 16 | Aufnahmeraum |
| 4 | Proximales Ende | 17 | Vertiefung |
| 5 | Distales Ende | 18 | Ausnehmung |
| 6 | Schneidkante | 19 | Einspannschaft |
| 7 | Randsenkelement | 20 | Zentrierbohrer |
| 8 | Basiselement | 21 | Stutzen |
| 9 | Senkpartikel | 22 | Kragen |
| 10 | Senkkörper | 23 | Spiralfeder |
| 11 | Tasche | | |
| 12 | Frontseite | | |
| 13 | Boden | | |

## Patentansprüche

1. Kernbohraufsatz (1) zur Herstellung von Ausnehmungen in einer Wandung für die Installation von Hohlwanddosen, der Kernbohraufsatz (1) umfassend:
a. eine Bohrkrone (2) mit einer röhrenförmigen Seitenwand (3), welche sich in eine axiale Richtung um eine Rotationsachse (RA) der Bohrkrone (2) von einem proximalen Ende (4) zu einem distalen Ende (5) der röhrenförmigen Seitenwand (3) erstreckt, wobei an dem distalen Ende (5) eine Schneidkante (6) angeordnet ist, und
b. mindestens ein im Bereich des proximalen Endes (4) der röhrenförmigen Seitenwand (3) angeordnetes Randsenkelement (7), wobei
c. das mindestens eine Randsenkelement (7) ein Basiselement und mindestens einen auf dem Basiselement angeordneten Senkkörper (10) umfasst, wobei der mindestens eine Senkkörper (10) zumindest bereichsweise in eine radiale Richtung ausserhalb einer Kontur der röhrenförmigen Seitenwand (3) angeordnet ist und zum Abtragen einer obersten Schicht der Wandung um die Ausnehmung der Wandung dient, und
d. der mindestens eine Senkkörper (10) je von mehreren Senkpartikeln (9) ausgebildet wird.

2. Kernbohraufsatz (1) gemäss Patentanspruch 1, **dadurch gekennzeichnet, dass** das Basiselement (8) und der Senkkörper (9) stoffschlüssig miteinander verbunden sind.

3. Kernbohraufsatz (1) gemäss einem der vorangehenden Patentansprüche, **dadurch gekennzeichnet, dass** die mehreren Senkpartikel (9) zur Ausbildung eines jeweiligen Senkkörpers (10) untereinander zumindest bereichsweise stoffschlüssig verbunden sind.

4. Kernbohraufsatz (1) gemäss einem der vorangehenden Patentansprüche, **dadurch gekennzeichnet, dass** der mindestens eine Senkkörper (10) mehrere Schichten von Senkpartikeln (9) umfasst.

5. Kernbohraufsatz (1) gemäss einem der vorangehenden Patentansprüche, **dadurch gekennzeichnet, dass** das Basiselement (8) tellerförmig ist.

6. Kernbohraufsatz (1) gemäss einem der vorangehenden Patentansprüche, **dadurch gekennzeichnet, dass** der mindestens eine Senkkörper (10) umlaufend um die Rotationsache (RA) auf dem Basiselement (8) angeordnet ist.

7. Kernbohraufsatz (1) gemäss einem der vorangehenden Patentansprüche, **dadurch gekennzeichnet, dass** auf dem Basiselement (8) mehrere voneinander beabstandete und um die Rotationsachse (RA) verteilt angeordnete Senkkörper (10) angeordnet sind.

8. Kernbohraufsatz (1) nach einem der vorangegangenen Patentansprüche, **dadurch gekennzeichnet, dass** das Basiselement (8) mindestens eine Tasche (11) zur bereichsweisen Aufnahme mindestens eines Senkkörpers (10) umfasst.

9. Kernbohraufsatz (1) gemäss einem der vorangehenden Patentansprüche, **dadurch gekennzeichnet, dass** die mehreren Senkpartikel (9) je eine Partikelgrösse zwischen 0.5 mm bis 1.2 haben.

10. Kernbohraufsatz (1) gemäss einem der vorangegangenen Patentansprüche, **dadurch gekennzeichnet, dass** die mehreren Senkpartikel (9) je eine Ummantelung und einen Kern umfassen, wobei ein Material der Ummantelung einen geringeren Schmelzpunkt hat als ein Material des Kerns.

11. Kernbohraufsatz (1) gemäss einem der vorangehenden Patentansprüche, **dadurch gekennzeichnet, dass** die mehreren Senkpartikel (9) zumindest bereichsweise aus Hartmetall bestehen.

12. Kernbohraufsatz (1) gemäss einem der vorangegangenen Patentansprüche, **dadurch gekennzeichnet, dass** der mindestens eine Senkkörpers (10), insbesondere das mindestens eine Randsenkelement (7), galvanisiert ist.

13. Verfahren zur Herstellung eines Kernbohraufsatzes (1), umfassend die folgenden Verfahrensschritte:
a. Bereitstellen eines Basiselements (8);
b. Bereitstellen von mehreren Senkpartikeln (9);
c. Auftragen mehrerer Senkpartikel (9) auf dem Basiselement (8) zur Ausbildung mindestens eines Senkkörpers (10);
d. Verbinden, insbesondere stoffschlüssiges Verbinden, der mehreren Senkpartikel (9) mit dem Basiselement (8) zu einem Randsenkelement (7).

14. Verfahren gemäss Patentanspruch 13, wobei die bereitgestellten Senkpartikel (9) je eine Ummantelung und einen Kern umfassen, und das Material der Ummantelung einen geringeren Schmelzpunkt hat als das Material des Kerns und wobei nach dem Auftragen der mehreren Senkpartikel (9) auf das Basiselement (8), das Basiselement (8) und die mehreren Senkpartikel (9) derart erhitzt werden, dass die jeweiligen Ummantelungen schmelzen und die mehreren Senkpartikel (9) mit dem Basiselement (8) stoffschlüssig zu einem Randsenkelement (7) verbinden.

15. Verfahren gemäss einem der Patentansprüche 13 bis 14, umfassend den folgenden Verfahrensschritt:
a. Einbringen von mindestens einer Tasche (11) in einer Frontseite (12) des Basiselementes (8) zur bereichsweisen Aufnahme mindestens eines Senkkörpers (10).

16. Verfahren gemäss einem der Patentansprüche 13 bis 15 umfassend den folgenden Verfahrensschritt:
a. Galvanisieren des Senkkörpers (10), insbesondere des gesamten Randsenkelementes (7).
